# DEMANDE DE BREVET EUROPEEN

(11) **EP 2 530 564 A2**
(43) Date de publication de la demande: **05.12.2012**
(21) Numéro de dépôt: 12170160.1
(22) Date de dépôt: 31.05.2012
(51) Int. Cl.: G06F 3/042, B64D 43/00

(54) **Système tactile a émetteurs et recepteurs optiques**

(30) Priorité: 01.06.2011 FR 1101680
(71) Demandeur: Thales, 92200 Neuilly Sur Seine (FR)
(72) Inventeur: Dominici, Johanna, 33320 Eysines (FR); Petitdemange, Arnaud, 33290 Blanqufort (FR); Becouarn, Loïc, 33600 Pessac (FR)
(74) Mandataire: Bréda, Jean-Marc

(57) **Abrégé**

Le domaine général de l'invention est celui des systèmes tactiles optiques montés au-dessus de zones (A) de surfaces d'affichage. Le système comprend au moins dans sa version de base, deux sources de lumière (S1) agencées de façon à réaliser au-dessus d'une surface d'affichage une « nappe lumineuse » couvrant au moins ladite surface, un premier imageur (C1) et un second imageur (C2) dont les champs optiques couvrent au moins la surface. Les deux sources sont disjointes du premier et du second imageur. Lorsqu'un premier objet (P) se situe au-dessus de la surface, une première et une seconde image lumineuses dudit objet sont captées par le premier imageur et le second imageur, le système comportant des moyens d'analyse permettant, par triangulation, à partir de la connaissance des positions de la première et de la seconde image lumineuse, de déterminer la position de ce premier objet au-dessus de la surface d'affichage. Dans des configurations plus élaborées, le système peut comprendre une pluralité de sources d'éclairage et d'imageurs permettant de couvrir des surfaces complexes, de permettre la détection « multi-touch » ou de sécuriser les fonctions de détection.

## Description

Le domaine de l'invention est celui des systèmes tactiles, et plus particulièrement des systèmes tactiles optiques. L'utilisation du système n'est pas limitée à une application particulière mais le système s'applique tout particulièrement aux planches de bord d'aéronef et à leurs systèmes avioniques.

Au tout début de l'aviation de ligne, cinq pilotes étaient nécessaires pour effectuer un vol. Ce nombre a ensuite été réduit à trois. Dans les années 1980, avec la généralisation des « glass cockpits », c'est-à-dire des cockpits comprenant de grands écrans de visualisation dédiés au pilotage et à la navigation, le poste d'ingénieur navigant fut supprimé et le nombre de pilotes est donc passé à deux.

Aujourd'hui, l'interaction entre les pilotes et les écrans du cockpit se fait principalement à l'aide de claviers et d'interfaces de type « souris » informatiques ou « track-balls ». Cependant, la charge croissante de travail des pilotes due à l'augmentation du trafic aérien et la tendance à la diminution du nombre de pilotes conduit les avionneurs et les équipementiers aéronautiques à rechercher des interfaces hommes-machines toujours plus efficaces et toujours plus ergonomiques. Les concepteurs travaillent en particulier sur la capacité de ces dispositifs à être « multi-touch », c'est-à-dire à prendre en compte simultanément plusieurs actions effectuées par le ou les pilotes.

L'utilisation d'écrans tactiles comme moyen d'interaction homme-machine s'est de plus en plus répandue dans la vie quotidienne. Ce moyen d'interaction facilite grandement l'utilisation de l'appareil associé en étant plus intuitif et plus rapide. L'utilisation d'écrans tactiles facilite donc l'interaction entre les pilotes et les écrans du cockpit, améliorant ainsi la sécurité du vol tout en réduisant la charge de travail des pilotes.

Cependant, l'introduction d'écrans tactiles dans un cockpit pose certains problèmes. En effet, un écran de cockpit doit répondre à certaines exigences d'environnement. On citera, ente autres, les contraintes optiques, les vibrations, les perturbations électromagnétiques, la résistance à la température, aux chocs, aux liquides, ... L'ajout de la technologie tactile sur l'écran rend plus difficile la tenue de ces exigences.

Aujourd'hui, peu d'avions sont équipés d'écrans tactiles et pour ceux qui le sont, les écrans tactiles ne sont pas des écrans critiques tels que les écrans dits PFD pour « Primary Flight Display » ou ND pour « Navigation Display » qui donnent les informations fondamentales concernant le pilotage et la navigation.

II existe actuellement différentes technologies de systèmes tactiles dits « multitouch ». On citera les systèmes résistifs, capacitifs projetés, optiques, acoustiques ou encore « in-cell ». Dans les technologies optiques, on distingue les technologies dites « optical imaging », « infrared Matrix» et « FTIR » (Frustrated Total Internal Reflection). Néanmoins, ces technologies ne sont pas parfaitement adaptées à une utilisation en environnement avionique pour les écrans critiques d'un cockpit.

La capacité « multi-touch » est réalisée par les technologies suivantes qui présentent les limitations suivantes :
- Technologie résistive
   - Ajout d'une dalle de verre devant l'écran ;
   - Réflectivité de l'écran dégradée ;
   - Baisse de la luminosité de l'écran ;
   - Nécessité d'une force d'activation importante pour les solutions « Verre-Verre » durcies pour l'environnement avionique ;
   - Génération possible de fausses activations ou « ghosts » en utilisation « dual-touch » ;
   - Bordures d'écran larges pour passer les connexions filaires de l'écran.
- Technologie capacitive projetée
   - Résolution limitée par la taille des éléments d'activation ;
   - Grande sensibilité au rayonnement électromagnétique et par ailleurs technologie rayonnante ;
   - Sérieuses difficultés pour une activation avec des gants ;
   - Impossibilité d'activation avec un objet tel qu'un stylo ;
- Technologie acoustique
   - Absence de maturité technique ;
   - Sensibilité à l'environnement vibratoire ;
   - Dégradation de la performance optique de l'écran, la surface de l'écran étant « suspendue » pour être isolée du reste du produit.
- Technologies « In Cell » intégrées au panneau LCD
   - Technologie optique : Présence de lumière indispensable : problèmes en utilisation de nuit ;
   - Technologie capacitive : Déformation indispensable de la surface de l'écran : incompatible des verres de renfort ajoutés en avionique pour protéger et maintenir les écrans.
- Technologie matricielle infrarouge « infrared Matrix»
   - Résolution limitée : tracé de trait médiocre et crénelé ;
   - Utilisation d'un grand nombre de composants (LEDs d'éclairage et photosenseurs) qui nuit à la fiabilité et à la durée de vie du produit ;
   - Problèmes d'incompatibilité en cas d'utilisation de jumelles de vision nocturne.
- Technologie « FTIR »
   - Dégradation des performances optiques due à l'ajout d'une dalle de verre devant l'écran ;
   - Réflectivité de l'écran dégradée ;
   - Baisse de la luminosité de l'écran ;
   - Problèmes d'incompatibilité en cas d'utilisation de jumelles de vision nocturne.
- Technologie « optical imaging »
   - Utilisation limitée sous fort éclairement où les senseurs sont saturés ;
   - Présence d'images fantômes en « dual-touch » ;
   - Problème d'incompatibilité en cas d'utilisation de jumelles de vision nocturne ;

Parmi les technologies optiques, les systèmes « optical imaging » sont les plus répandus actuellement. II existe différents principes techniques mettant en oeuvre cette technologie. On citera à titre d'exemple, l' « optical position detector » de la société japonaise EIT Co et qui a fait l'objet de la demande de brevet PCT de référence WO 2005/031554.

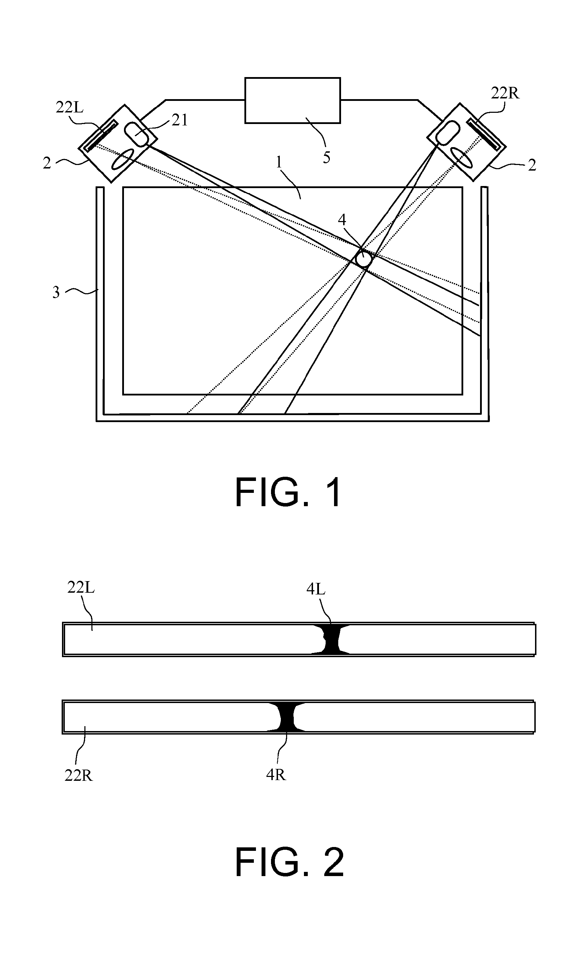

Le principe technique décrit dans cette demande est représenté sur les figures 1 et 2 qui s'inspirent des figures de la demande. Comme on le voit sur la figure 1, le dispositif utilisé pour détecter la position d'un objet ou d'un doigt d'un utilisateur sur une surface 1 comprend essentiellement deux modules d'émission-réception 2 identiques et une barrière 3 rétro-réfléchissante disposée en périphérie de la surface 1. Cette barrière est en forme de U sur la figure 1. Chaque module d'émission-réception 2 comprend une source lumineuse 21 agencée de façon à éclairer toute la surface 1 et un ensemble de réception comprenant un capteur photosensible linéaire ou surfacique 22 dont le champ permet de couvrir toute la surface 1. Le fonctionnement est le suivant. En l'absence d'objet au voisinage ou au contact de la surface, la lumière émise par une source lumineuse 21 est rétro-réfléchie par la barrière 3 et illumine totalement la surface du capteur 22. En présence d'un objet 4 au voisinage ou au contact de la surface, la lumière émise par la source lumineuse 21 et interceptée par l'objet, soit avant réflexion sur la barrière, soit après réflexion sur la barrière, n'atteint pas la surface du capteur 22 et crée une ombre. Sur la figure 2, on a représenté la répartition de lumière sur les capteurs 22R et 22L des modules 2 situées à gauche et à droite de la surface 1. Les positions des ombres 4R et 4L sont représentatives de la position de l'objet sur la surface 1. II est facile, par l'analyse de leurs positions exactes sur les capteurs 22R et 22L, de retrouver la position de l'objet 4. Le calculateur 5 réalise ce traitement.

II existe d'autres variantes à ce système. Par exemple, la bordure de l'écran peut être illuminée dans l'infrarouge soit par des illuminateurs externes, soit par des illuminateurs intégrés dans la bordure. Deux senseurs matriciels viennent ensuite imager la bordure lumineuse et détecter la présence d'une ombre quand un pointeur interagit avec l'écran.

Les limitations et les inconvénients de ces solutions techniques sont les suivants :
- Compatibilité NVG (Night Vision Google): Les sources de lumières travaillent à une longueur d'onde située dans l'infrarouge proche, à 880 nm, par exemple, ce qui les rend incompatibles de l'utilisation de jumelles de vision nocturne ;
- Faible dynamique de luminosité : Les solutions actuelles, à base de capteurs matriciels de type CCD ou CMOS, ont des dynamiques d'acquisition limitées. Ces capteurs ne peuvent pas fonctionner, à temps de pose fixe, sur une plage lumineuse très large, or, l'éclairement solaire entrant dans un cockpit peut varier sur plusieurs ordres de grandeur. Un écran tactile à imagerie optique est vite saturé par la lumière ambiante quand le soleil éclaire directement l'écran ;
- Complexité du traitement d'images : Les solutions dites « COTS » existantes utilisent des composants électroniques ou logiciels jugés complexes par les autorités de certification avionique. Un capteur matriciel nécessite une électronique de commande et d'acquisition sophistiquée. L'accès aux sources des logiciels utilisés est difficile. Le composant peut, par ailleurs, être coûteux.
- Possibilité de fausses activations liées aux images fantômes: En utilisation dite « dual-touch » mettant en oeuvre deux pointeurs simultanément, les solutions actuelles présentent souvent des artefacts de détection générant de fausses activations.

Le système selon l'invention, tout en préservant les avantages de la technologie « optical imaging », permet de résoudre en totalité ou en partie plusieurs des problèmes ci-dessus. La solution consiste en un ensemble de capteurs optiques et de sources d'illumination correctement positionnés pour permettre la détection d'un pointeur et sa position, sur un écran où l'affichage est dynamique ou sur une zone d'affichage statique. A la différence des systèmes précédents qui fonctionnent par ombrage, l'objet à détecter apparaissant en noir sur fond lumineux, le système selon l'invention fonctionne par détection directe, l'objet à détecter étant lumineux sur fond sombre au niveau des surfaces photosensibles.

Cette disposition conserve les avantages des systèmes dits « optical imaging » qui sont la non-dégradation des performances optiques de l'écran associé, le faible encombrement de la technologie, le faible coût puisque basée sur des composants COTS à bas coût, la faible masse du système, l'adaptabilité aux différentes configurations de cockpit, la possibilité d'avoir une très grande surface tactile...

Mais, de plus, la solution selon l'invention permet de résoudre les problèmes de compatibilité NVG, l'utilisation en « multitouch », le fonctionnement sous fort éclairement, la simplicité et la maîtrise de l'électronique de commande et du logiciel associé, la redondance nécessaire pour satisfaire les contraintes de sécurité.

Ses autres avantages sont l'utilisation d'un plus faible nombre de sources lumineuses et une grande liberté dans leur positionnement.

Plus précisément, l'invention a pour objet un système tactile optique monté au-dessus d'une zone de détection d'une surface d'affichage, ledit système comprenant une première source de lumière agencée de façon à réaliser au-dessus de ladite zone de la surface d'affichage une « nappe lumineuse » couvrant au moins ladite zone, un premier imageur et un second imageur dont les champs optiques couvrent au moins ladite zone, **caractérisé en ce que**, la première source étant disjointe du premier et du second imageur, lorsqu'un premier objet se situe au-dessus de ladite zone, une première et une seconde image lumineuses dudit objet sont captées par le premier imageur et le second imageur, le système comportant des moyens d'analyse permettant, par triangulation, à partir de la connaissance des positions de la première et de la seconde image lumineuse, de déterminer la position de ce premier objet au-dessus de ladite zone de la surface d'affichage.

Avantageusement, le système comporte un troisième imageur de façon que, lorsqu'un premier et un second objet se situent au-dessus de la zone de la surface d'affichage, une première, une seconde et une troisième image lumineuse du premier objet sont captées par le premier, le second et le troisième imageur, une quatrième, une cinquième et une sixième image lumineuse du second objet sont captées par le premier, le second et le troisième imageur, le système comportant des moyens d'analyse permettant, par triangulation, à partir de la connaissance des positions des six images lumineuses, de déterminer avec certitude la position du premier objet et du second objet au-dessus de ladite zone de la surface d'affichage.

Avantageusement, le système comporte une seconde source de lumière disjointe de la première source de lumière. Dans ce cas, dans un premier mode de réalisation, la première et la seconde source de lumière émettent de la lumière périodiquement et jamais simultanément au cours d'un fonctionnement normal du système tactile optique. Dans un second mode de réalisation, la première source de lumière émet dans une première bande spectrale, la seconde source de lumière émet dans une seconde bande spectrale disjointe de la première bande spectrale, les imageurs comprenant des filtres spectraux permettant de transmettre une seule des deux bandes spectrales. Les sources de lumières peuvent aussi être éclairées alternativement pour ne pas se perturber l'une l'autre.

Avantageusement, pour les utilisations de nuit avec jumelles amplificatrices de lumière, la ou les sources émettent dans une bande spectrale située en dehors de la bande spectrale d'amplification de jumelles de vision de nuit et en ce que les imageurs sont sensibles dans ladite bande spectrale desdites sources de lumière.

Avantageusement, la ou les sources de lumière comportent des moyens optiques agencés de façon que l'éclairement moyen au-dessus de la zone de la surface d'affichage et dans un plan perpendiculaire à celle-ci soit sensiblement constant. Plus précisément, les moyens optiques comprennent une optique de collimation et un guide de lumière ou un guide de lumière comportant des motifs diffusants disposés régulièrement.

Avantageusement, l'imageur comporte un pare-soleil et la périphérie de la surface d'affichage est entourée d'une barrière absorbant la lumière solaire.

Dans une première application, la surface d'affichage est de forme sensiblement rectangulaire et la zone tactile recouvre la totalité de ladite surface d'affichage.

Dans une seconde application, la surface d'affichage comporte plusieurs zones, le système comportant une pluralité de sources de lumière et d'imageurs agencés de façon que la position d'au moins un objet puisse être déterminée dans chaque zone.

Avantageusement, la surface d'affichage est un écran de visualisation ou comporte des zones d'affichage statiques.

Dans une utilisation privilégiée, la surface d'affichage appartient à un système avionique monté dans un cockpit d'aéronef. Dans ce cadre, la surface d'affichage recouvre une partie ou la totalité de la planche de bord.

L'invention sera mieux comprise et d'autres avantages apparaîtront à la lecture de la description qui va suivre donnée à titre non limitatif et grâce aux figures annexées parmi lesquelles :
Les figures 1 et 2 déjà commentées représente un système tactile optique selon l'art antérieur ;
La figure 3 représente un premier système tactile optique selon l'invention comprenant une source de lumière et deux imageurs ;
La figure 4 représente les signaux reçus par les imageurs de la figure 3 en cas d'appui dans la zone d'affichage ;
La figure 5 représente les effets de l'éclairement solaire et les moyens de les atténuer ;
La figure 6 illustre le problème de la détermination de la position simultanée de deux appuis dans le cas de l'utilisation de deux imageurs ;
La figure 7 représente la détermination de la position simultanée de deux appuis dans le cas de l'utilisation de trois imageurs ;
La figure 8 représente un système tactile optique selon l'invention comprenant deux sources de lumière et trois imageurs ;
La figure 9 représente un mode de gestion possible des sources de lumière et des imageurs du dispositif précédent ;
Les figures 10 et 11 représentent une solution d'illumination de la surface par un faisceau couvrant toute la largeur de l'écran ;
Les figures 12 et 13 représentent deux planches de bord d'aéronef munies de systèmes tactiles optiques selon l'invention.

Le système tactile optique selon l'invention est monté au-dessus d'une zone de détection d'une surface d'affichage. De façon générale, il comprend un ensemble d'imageurs optiques C et de sources d'illumination S correctement positionnés pour permettre la détection d'un ou de plusieurs pointeurs P et leurs positions au-dessus de la surface d'affichage A.

La surface d'affichage A peut être un ou plusieurs écrans d'affichage. On parle alors d'affichage dynamique. Elle peut être une zone d'affichage statique réalisée au moyen d'autocollants, de sérigraphie ou combiner les deux fonctions.

Le pointeur P peut être un ou plusieurs doigts de l'utilisateur, un stylet ou tout autre objet. La seule condition est que le pointeur ne soit pas trop large pour être précisément détecté et qu'il soit au moins en partie diffusant.

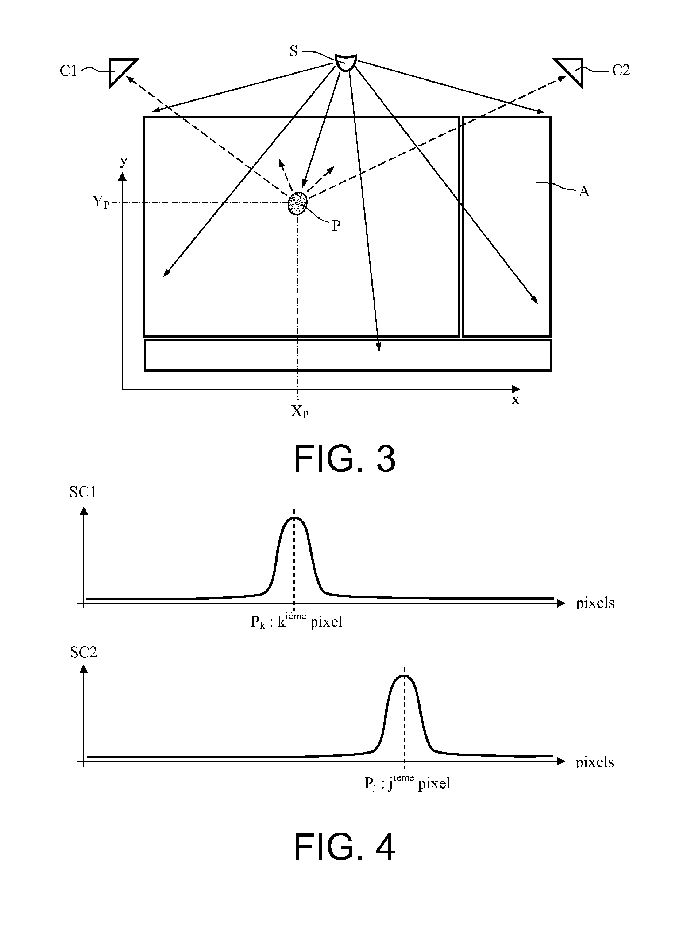

Le principe général de fonctionnement des systèmes selon l'invention est décrit sur les figures 3 et 4 dans le cas le plus simple, c'est-à-dire une seule zone de détection A, une seule source d'illumination S, uniquement deux imageurs C1 et C2 et un seul pointeur P à détecter. Comme on le verra, les principes décrits sont facilement généralisables à une pluralité de zones de détection et à plusieurs pointeurs à détecter. De la même façon, la zone de détection de la figure 3 est rectangulaire mais le système selon l'invention peut facilement s'adapter à différents types de formes de zones de détection. L'emplacement de la source et des imageurs est également donné à titre indicatif.

La source d'illumination S émet de la lumière parallèlement à la zone d'affichage dans une couche allant de la surface d'affichage jusqu'à quelques millimètres d'épaisseur. Cette « nappe lumineuse » doit couvrir, bien entendu, toute la zone de détection et ne pas éclairer les imageurs. Cette source de lumière sert à illuminer le pointeur P lorsqu'il désigne un endroit particulier sur la zone d'affichage. On peut utiliser des diodes électroluminescentes ou des diodes laser. Dans ce cas, celles-ci sont associées à un diffuseur et/ou une optique permettant d'élargir le faisceau de façon à couvrir l'ensemble de la zone tactile.

Chaque imageur comporte une optique de focalisation et un capteur optique. Chaque imageur est, en fait, une micro-caméra. Le capteur optique est composé de pixels photosensibles, il peut être surfacique ou linéaire. II forme une image de la surface de la zone d'affichage dans un plan parallèle au plan de la zone d'affichage. Lorsqu'il n'y a pas de pointeur sur la zone d'affichage, le capteur ne détecte aucune lumière, l'image est donc noire. Lorsque le pointeur est illuminé, il réfléchit et diffuse la lumière, ce qui crée une image lumineuse sur les capteurs des deux imageurs. Les signaux SC1 et SC2 délivrés par les capteurs et représentés en figure 4 permettent, après traitement, de déterminer les pixels photosensibles Pₖ et Pⱼ associés au pointeur comme on le voit sur la figure 4. Il est facile, connaissant la position de ces pixels Pₖ et Pⱼ de trouver les angles entre les plans des capteurs et le pointeur. La connaissance des deux angles entre le pointeur et les deux capteurs permet, par triangulation, de déterminer la position (Xp, Yp) du pointeur sur la zone d'affichage.

Une calibration préalable permet de connaître le positionnement et l'orientation des capteurs l'un par rapport à l'autre.

Le système selon l'invention, en particulier lorsqu'il est utilisé dans un environnement aéronautique, doit fonctionner à la fois sous fort éclairement solaire et, pour certaines utilisations, en conditions de nuit.

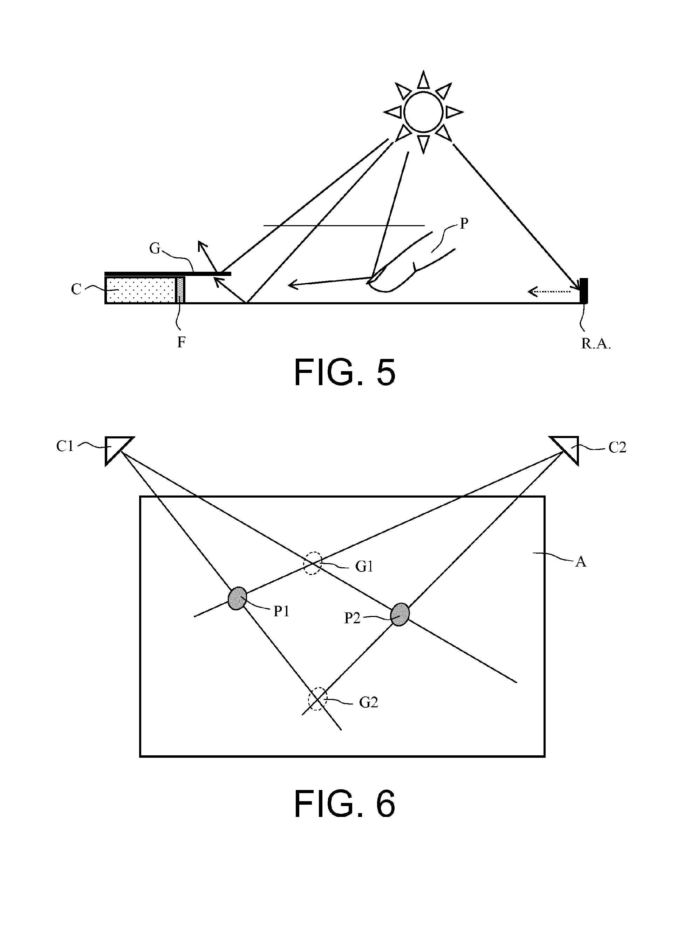

Pour assurer le fonctionnement sous éclairement solaire, on utilise différentes techniques illustrées en figure 5. Pour limiter le risque de saturation du capteur de l'imageur C, on ajoute devant l'optique de focalisation un filtre spectral F calé sur la longueur d'onde de la source de lumière associé. Ainsi, le rayonnement solaire est fortement atténué sans dégradation du signal reflété par le pointeur.

Si le pointeur est éclairé par le soleil, ce qui est un problème majeur pour les solutions existantes basées sur la technologie « optical imaging », le signal capté par le détecteur n'est pas perturbé. Au contraire, il est amplifié et le pointeur n'est que mieux détecté car le reste de l'image est toujours sombre.

Cependant, si le soleil se réfléchit sur un autre objet que le pointeur disposé dans le champ de vision des capteurs, celui-ci pourrait causer une fausse activation. Si cet objet est de petite taille, équivalente à celle du pointeur, le signal lumineux reçu par les capteurs ne cache pas le signal émis par le pointeur. La position de l'objet « intrus » est déterminée comme étant en dehors de la zone tactile et celui-ci n'est donc pas pris en compte par le système.

Pour éliminer les signaux suffisamment importants pour masquer le signal du pointeur, la zone tactile est entourée par des bords absorbants R.A. la lumière d'une épaisseur suffisante pour couvrir le champ de vision des capteurs, soit quelques millimètres.

Enfin, dans certains cas, un positionnement judicieux des imageurs peut éliminer en grande partie les problèmes d'éclairement solaire. Ainsi, lorsque le système est disposé sur une planche de bord, un positionnement des imageurs à l'intérieur de la partie inférieure de la « casquette » du cockpit aussi appelée « glareshield » permet d'éviter l'illumination directe des capteurs par le soleil.

De plus, une conception judicieuse du module intégrant le capteur peut empêcher le soleil d'illuminer directement le capteur. En effet, en ajoutant un « glareshield » G ou un pare-soleil à l'imageur tel qu'on le voit sur la figure 5, les rayons du soleil n'atteignent jamais l'incidence limite permettant l'illumination directe du capteur.

De nuit, pour assurer la compatibilité avec l'utilisation de jumelle de vision de nuit dites « NVG » pour « Night Vision Goggle », les sources de lumière ont des spectres d'émission situés au-delà de la longueur d'onde d'amplification des jumelles, généralement 930 nm. Ces sources peuvent être des diodes laser ou des diodes électroluminescentes. Les capteurs ont alors une sensibilité spectrale adaptée à ces longueurs d'onde.

Comme on l'a vu, il faut au moins deux capteurs et une source de lumière pour un fonctionnement en mode de détection d'un seul objet, mode dit « mono-touch ». Pour un fonctionnement en mode de détection de deux objets, mode dit « dual-touch » ou plus, deux imageurs ne suffisent plus. En effet, comme on le voit sur la figure 6, la présence simultanée de deux objets P1 et P2 à deux endroits différents de la surface tactile va donner sur chaque capteur C1 et C2 deux images. Ces deux images ont comme coordonnées sur le premier capteur Pₖ₁ et Pₖ₂ et sur le second capteur Pⱼ₁ et Pⱼ₂. Bien entendu, il est impossible de déterminer à quels objets appartiennent ces différentes coordonnées. Graphiquement, comme on le voit sur la figure 6, quatre objets peuvent correspondre, les deux objets réels P1 et P2 et deux objets fantômes ou « ghosts » G1 et G2.

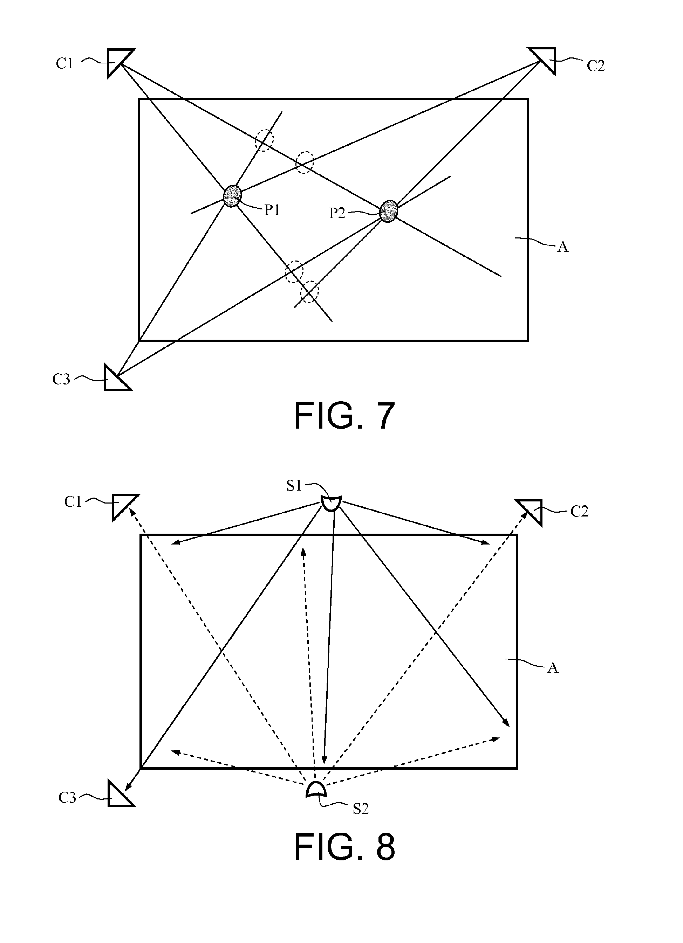

Pour lever l'indétermination, il suffit d'ajouter un troisième imageur C3 comme on le voit sur la figure 7. La disposition de ce troisième imageur dépend, bien entendu, de la position des premiers imageurs et du champ couvert par ce troisième imageur. Il est également possible pour s'assurer que les trois imageurs sont toujours correctement éclairés d'ajouter une seconde source de lumière S2 comme on le voit sur la figure 8.

Néanmoins, à partir du troisième imageur, l'ajout d'un nouvel imageur et d'au moins une source de lumière peut perturber le signal reçu par les autres imageurs comme on le voit sur la figure 8. En effet, il est essentiel que les différents imageurs ne soient pas directement éclairés par les sources d'émission. Deux solutions permettent de régler ce problème.

La première est de faire un filtrage spectral différent sur les différents capteurs en choisissant judicieusement les longueurs d'onde des sources de lumière. Par exemple, la bande spectrale de détection des capteurs 1 et 2 est adaptée à la longueur d'onde de la source 1 tout en rejetant, grâce à un filtrage spectral, la longueur d'onde de la source 2, et la bande spectrale de détection du capteur 3 est adaptée à la longueur d'onde de la source 2 tout en rejetant, grâce à un filtrage spectral différent, la longueur d'onde de la source 1.

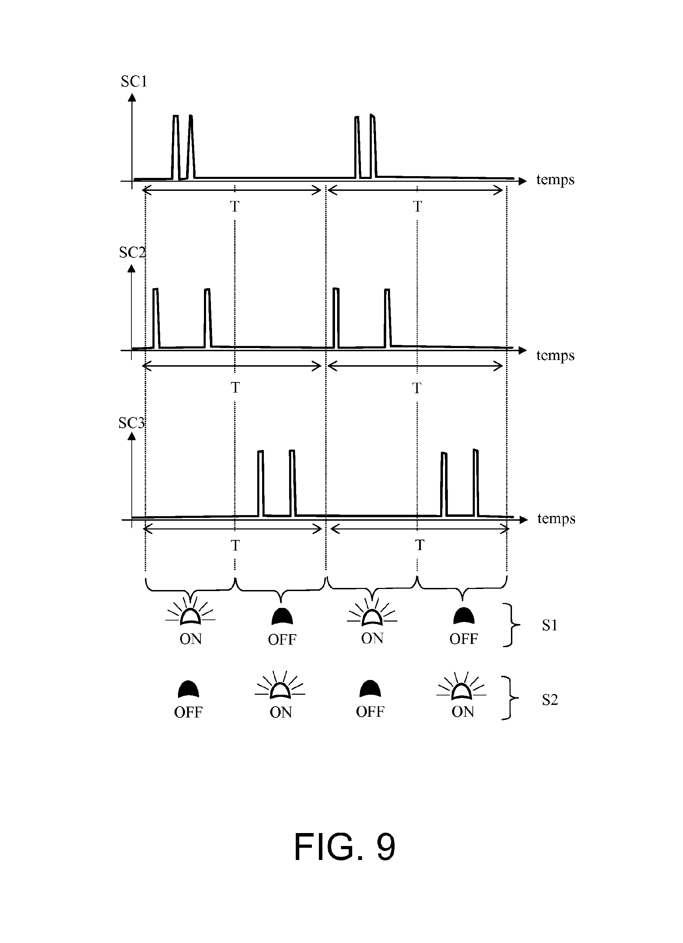

La seconde solution est de séquencer temporellement les signaux émis par les sources de lumière. La figure 9 représente un exemple possible de ce type de séquence dans le cas d'un système tactile à deux sources et trois imageurs et de deux objets détectés. La durée totale d'une séquence est égale à T. Cette durée T est généralement de quelques millisecondes à quelques dizaines de millisecondes. Chaque durée T comprend deux demi-périodes. Pendant la première demi-période, la première source S1 est allumée et la seconde source S2 est éteinte. Le premier capteur C1 et le second capteur C2 sont activés, le troisième capteur C3 est éteint. Pendant la seconde demi-période, la première source S1 est éteinte et la seconde source S2 est allumée. Le premier capteur C1 et le second capteur C2 sont éteints, le troisième capteur C3 est activé. Ainsi, la première source n'éclaire jamais le troisième capteur et la seconde source n'éclaire jamais les premiers et seconds capteurs. L'analyse des différents signaux SC1, SC2 et SC3 issus des capteurs permet de retrouver les positions des deux objets. Cette solution permet de plus de vérifier le bon fonctionnement des différents capteurs et sources de lumière en activant simultanément, lorsqu'aucun pointeur n'est détecté, tous les capteurs et sources de lumière. On vérifiera ainsi que les capteurs SC1 et SC2 « voient » la source S2 et que le capteur SC3 « voit » la source S1.

L'ajout d'un ou de plusieurs capteurs et d'une ou de plusieurs sources de lumière permet, en plus du fonctionnement « multi-touch », une redondance utile pour satisfaire aux contraintes avioniques de sécurité.

Si l'on utilise une source ponctuelle pour éclairer toute la zone de détection, l'éclairement varie de façon importante selon que l'on se trouve plus ou moins prêt de la source d'éclairage. En théorie, la détection par les capteurs est indépendante du niveau de lumière reçu. En pratique, il peut être avantageux que la source de lumière soit répartie uniformément selon un faisceau uniforme couvrant toute la largeur de la zone. On utilise à cette fin une optique de mise en forme de type guide de lumière pour permettre un éclairement plus uniforme du désignateur quelque soit sa position sur la surface de la zone de détection.

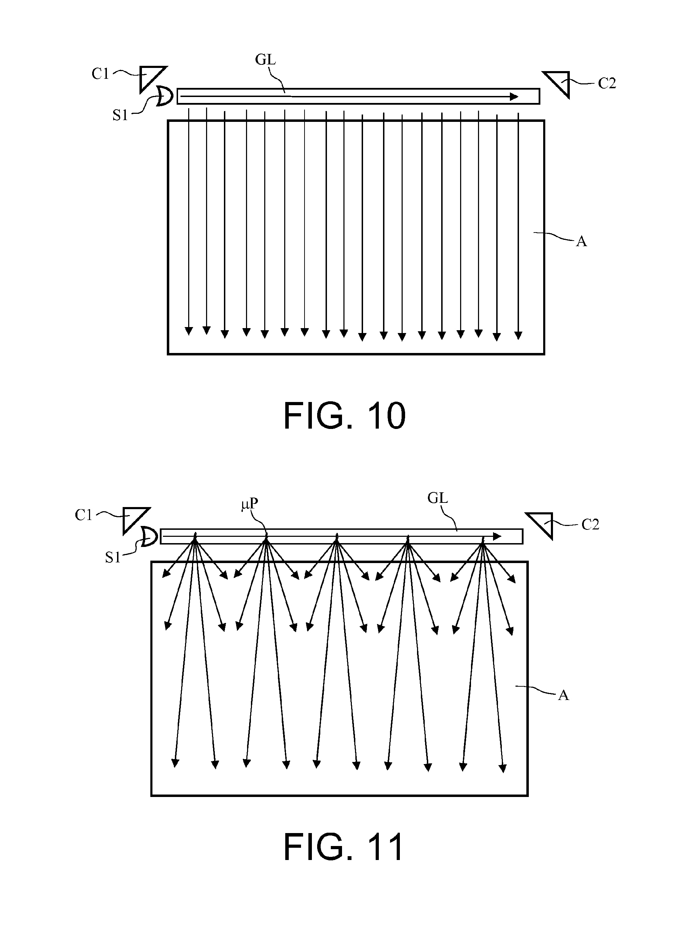

La figure 10 représente un premier mode de réalisation de cette source à répartition uniforme. La source comporte une optique de collimation à réflecteur de Fresnel. Cette optique est généralement une portion de parabole qui peut être utilisée soit en réflexion totale interne soit en réflexion directe dans l'air. La lumière collimatée est ensuite uniformément diffusée par un guide de lumière GL. On peut multiplier les sources S1 pour couvrir la largeur complète de la zone de détection.

La figure 11 représente un second mode de réalisation de cette source à répartition uniforme. Dans ce cas, le guide de lumière GL comporte des motifs ou « patterns » diffusants régulièrement espacés. Ces motifs sont généralement des microprismes µP. Le guide peut comporter sur sa tranche un film à prismes permettant une meilleure directivité. La lumière est alors légèrement diffuse mais l'éclairement du désignateur reste plus uniforme qu'avec une source simple.

II est également possible d'utiliser une pluralité de sources identiques situées d'un même côté d'une zone pour uniformiser l'éclairement.

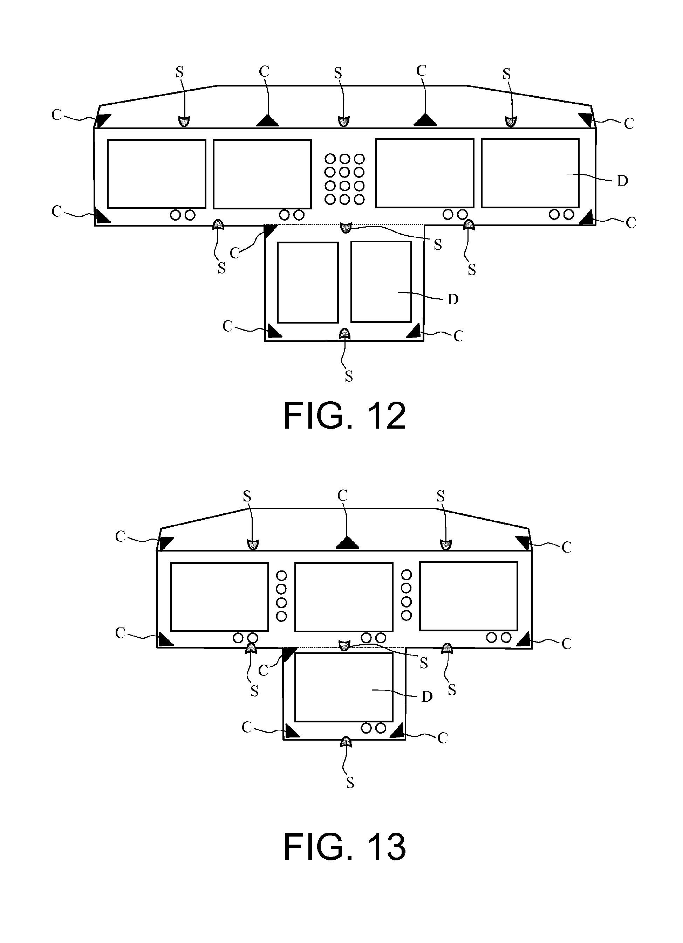

Le système tactile optique selon l'invention s'applique tout particulièrement aux applications aéronautiques et en particulier aux planches de bord d'aéronefs. II est facile de l'adapter aux différentes configurations de cockpit. Les figures 12 et 13 représentent deux configurations de cockpit différentes. La première comporte six écrans de visualisation D disposés en T et les panneaux de commande associés. On démontre qu'une configuration de système tactile comprenant sept sources S et neuf imageurs C est nécessaire pour assurer la couverture totale de la planche de bord, celle-ci étant composée de deux plans différents. La seconde configuration comporte quatre écrans de visualisation disposés en T et les panneaux de commande associés. On démontre qu'une configuration de système tactile comprenant six sources S et huit imageurs C est nécessaire pour assurer la couverture totale de la planche de bord, celle-ci étant composée de deux plans différents. Quelle que soit la configuration du cockpit, il suffit de placer les capteurs et les sources de lumière en nombre suffisant et aux endroits stratégiques pour rendre l'intégralité de la planche de bord tactile, écrans et boutons compris.

En résumé, les systèmes tactiles optiques selon l'invention ont les avantages suivants :
- Maintien sans perturbations des performances optiques des écrans de visualisation ;
- Fonctionnement assuré sous fort éclairement ;
- Grande capacité d'adaptation et d'évolution en fonction des installations à couvrir ;
- Détection assurée sur une très grande surface, pas nécessairement homogène et rectangulaire ;
- Capacité forte de redondance pour assurer une fiabilité et une sécurité optimale ;
- Utilisation en « dual-touch » ou plus en ajoutant des modules sans créer d'images fantômes ;
- Compatibilité avec l'utilisation de jumelles de vision nocturne (capteurs et sources de lumière à des longueurs d'onde supérieures à 930 nm) ;
- Utilisation d'éléments à bas coûts tels que des capteurs linéaires ou surfaciques, des diodes laser ou des LEDs ;
- Grande modularité du système, les sources d'émission et les imageurs étant disjoints ;
- Fluidité de l'interaction avec le pointeur car le système ne nécessite pas de force d'appui ;
- Résolution et précision bien meilleure que les solutions alternatives de l'art antérieur.

## Revendications

1. Système tactile optique monté au-dessus d'une zone (A) d'une surface d'affichage, ledit système comprenant :
un premier imageur (C1) et un second imageur (C2) dont les champs optiques couvrent au moins ladite zone (A) ;
**caractérisé en ce que**, le système tactile optique comprend une première source de lumière et une seconde source de lumière (S, S1, S2), chaque source agencée de façon à réaliser au-dessus de ladite zone de la surface d'affichage une « nappe lumineuse » couvrant au moins ladite zone, le spectre d'émission de la première source de lumière étant disjoint du spectre d'émission de la seconde source de lumière ou la première source de lumière et la seconde source de lumière n'émettant pas simultanément, chaque source de lumière étant disjointe du premier et du second imageur, lorsqu'un premier objet (P) se situe au-dessus de ladite zone, une première et une seconde images lumineuses dudit objet données soit par la première source de lumière soit par la seconde source de lumière sont captées par le premier imageur et le second imageur, le système comportant des moyens d'analyse permettant, par triangulation, à partir de la connaissance des positions de la première et de la seconde images lumineuses, de déterminer la position de ce premier objet au-dessus de ladite zone de la surface d'affichage.

2. Système tactile optique selon la revendication 1, **caractérisé en ce qu'**il comporte un troisième imageur (C3) de façon que, lorsqu'un premier et un second objet (P1, P2) se situent au-dessus de la zone de la surface d'affichage, une première, une seconde et une troisième images lumineuses du premier objet sont captées par le premier, le second et le troisième imageurs, une quatrième, une cinquième et une sixième images lumineuses du second objet sont captées par le premier, le second et le troisième imageurs, le système comportant des moyens d'analyse permettant, par triangulation, à partir de la connaissance des positions des six images lumineuses, de déterminer avec certitude la position du premier objet et du second objet au-dessus de ladite zone de la surface d'affichage.

3. Système tactile optique selon l'une des revendications 1 ou 2, **caractérisé en ce que** la première et la seconde source de lumière émettent de la lumière périodiquement et jamais simultanément au cours d'un fonctionnement normal du système tactile optique.

4. Système tactile optique selon l'une des revendications 1 ou 2, **caractérisé en ce que** la première source de lumière émet dans une première bande spectrale, la seconde source de lumière émet dans une seconde bande spectrale disjointe de la première bande spectrale, les imageurs comprenant des filtres spectraux permettant de transmettre une seule des deux bandes spectrales.

5. Système tactile optique selon l'une des revendications 1 à 4, **caractérisé en ce que** la ou les sources émettent dans une bande spectrale située en dehors de la bande spectrale d'amplification de jumelles de vision de nuit et **en ce que** les imageurs sont sensibles dans ladite bande spectrale desdites sources de lumière.

6. Système tactile optique selon l'une des revendications précédentes, **caractérisé en ce que** la ou les sources de lumière comportent des moyens optiques (GL, µP) agencés de façon que l'éclairement moyen au-dessus de la zone de la surface d'affichage et dans un plan perpendiculaire à celle-ci soit sensiblement constant.

7. Système tactile optique selon la revendication 6, **caractérisé en ce que** les moyens optiques comprennent une optique de collimation et un guide de lumière (GL).

8. Système tactile optique selon la revendication 6, **caractérisé en ce que** les moyens optiques comprennent un guide de lumière (GL) comportant des motifs (µP) diffusants disposés régulièrement.

9. Système tactile optique selon l'une des revendications 1 à 8, **caractérisé en ce que** l'imageur comporte un pare-soleil (G) et **en ce que** la périphérie de la surface d'affichage est entourée d'une barrière (R.A.) absorbant la lumière solaire.

10. Système tactile optique selon l'une des revendications 1 à 9, **caractérisé en ce que** la surface d'affichage est de forme sensiblement rectangulaire et que la zone recouvre la totalité de ladite surface d'affichage.

11. Système tactile optique selon l'une des revendications 1 à 9, **caractérisé en ce que** la surface d'affichage comporte plusieurs zones, le système comportant une pluralité de sources de lumière et d'imageurs agencés de façon que la position d'au moins un objet puisse être déterminée dans chaque zone.

12. Système tactile optique selon l'une des revendications précédentes, **caractérisé en ce que** la surface d'affichage est un écran de visualisation (D).

13. Système tactile optique selon l'une des revendications précédentes, **caractérisé en ce que** la surface d'affichage comporte des zones d'affichage statiques.

14. Système tactile optique selon l'une des revendications précédentes, **caractérisé en ce que** la surface d'affichage appartient à un système avionique monté dans un cockpit d'aéronef.

15. Système tactile optique selon la revendication 14, **caractérisé en ce que** la surface d'affichage recouvre une partie ou la totalité de la planche de bord.
